# EUROPÄISCHE PATENTSCHRIFT

(11) **EP 0 422 326 B1**
(45) Veröffentlichungstag und Bekanntmachung des Hinweises auf die Patenterteilung: **22.09.1993**
(21) Anmeldenummer: 90106103.6
(22) Anmeldetag: 30.03.1990
(51) Int. Cl.: B60Q 3/04

(54) **Anzeigeeinheit**
Display unit
Unité d'affichage

(30) Priorität: 12.10.1989 DE 3934061
(43) Veröffentlichungstag der Anmeldung: 17.04.1991
(73) Patentinhaber: VDO Adolf Schindling AG, D-60487 Frankfurt (DE)
(72) Erfinder: Roshop, Jürgen, D-6231 Schwalbach/Ts (DE)
(74) Vertreter: Klein, Thomas, Dipl.-Ing. (FH)

(56) Entgegenhaltungen:
- EP-A- 0 094 316
- GB-A- 2 137 394

## Beschreibung

Die Erfindung betrifft eine Anzeigeeinheit mit mehreren voneinander unabhängigen Displays, beispielsweise eines Displays für die Geschwindigkeitsanzeige, eines Displays für die Wassertemperatur und eines Displays für die Füllstandsanzeige eines Kraftstofftankes.

Anzeigeeinheiten der vorstehenden Art sind in heutigen Kraftfahrzeugen vorgesehen und deshalb allgemein bekannt. Bei ihnen befinden sich die einzelnen Displays auf einer dem Betrachter zugewandten Ebene. Die einzelnen Anzeigen eines Kraftfahrzeuges haben stark unterschiedliche Wichtigkeit. Von höchster Wichtigkeit ist beispielsweise das Tachometer. Die Uhr oder die Anzeige für die Fahrzeuginnentemperatur sind für die Verkehrssicherheit von geringerer Bedeutung. Solche unterschiedlichen Prioritäten der einzelnen Anzeigen berücksichtigt man bislang dadurch, daß man wichtige Anzeigen im unmittelbaren Blickfeld des Fahrers und weniger wichtige Anzeigen seitlich davon anordnete.

Der Erfindung liegt die Aufgabe zugrunde, eine Anzeigeeinheit der eingangs genannten Art so auszubilden, daß die Wichtigkeit einzelner Anzeigen dem Fahrer auf andere Weise sichtbar gemacht wird als durch mehr oder minder weites, seitliches Herausrücken der Anzeigen aus seinem Sichtfeld.

Diese Aufgabe wird erfindungsgemäß dadurch gelöst, daß in einem lichtundurchlässigen, innenseitig dunkel ausgebildeten Gehäuse hintereinander zumindest zwei durchsichtige, dünnwandige Lichtumlenkscheiben und die Displays an zumindest einer Seitenwand des Gehäuses vorgesehen sind und daß die Lichtumlenkscheiben zur Reflexion des Bildes des jeweiligen Displays zu einer gemeinsamen Betrachtungsseite des Gehäuses ausgerichtet sind.

Durch diese Gestaltung wird für die einzelnen Displays eine neue Dimension erschlossen. Während bisher verschiedene Displays in einer Ebene nebeneinander oder übereinander angeordnet wurden, erscheinen sie bei der erfindungsgemäßen Anzeigeeinheit mehr oder minder weit hintereinander in Betrachtungsrichtung des Fahrers. Dadurch kann man die Wertigkeit der Anzeigen durch den Abstand vom Fahrer in Betrachtungsebene festlegen. Möglich ist es auch, Skalen weiter in den Hintergrund zu verlegen, damit beim Ablesen das auf Weitsicht eingestellte Auge des Fahres sich nicht unerwünscht stark verändern muß, um die Skala scharf zu erkennen.

Eine konstruktiv besonders einfache Ausführungsform der erfindungsgemäßen Anzeigeeinheit besteht darin, daß die Lichtumlenkscheiben von der Betrachtungsseite aus gesehen im Gehäuse hintereinander in einem Winkel von 45 Grad zum Betrachter und die Displays entsprechend auf der Oberseite oder Unterseite des Gehäuses oberhalb bzw. unterhalb der Lichtumlenkscheiben angeordnet sind.

Eine besonders gute Berücksichtigung der unterschiedlichen Prioritäten der Anzeigen eines Kraftfahrzeugs ist gegeben, wenn das wichtigste Display der der Betrachtungsseite nächsten Lichtumlenkscheibe zugeordnet ist und die übrigen Displays entsprechend ihrer Wichtigkeit den weiter rückwärts befindlichen Lichtumlenkscheiben zugeordnet sind.

Alle Displays sind stets gemeinsam zu sehen, wenn die einzelnen Displays eine gemeinsame Beleuchtung aufweisen. Hierzu müssen die Displays natürlich so versetzt zueinander angeordnet sein, daß ihre jeweiligen Bilder sich vom Fahrer aus gesehen nicht überlappen. Alternativ könnte man natürlich auch bei nicht versetzten Displays die Lichtumlenkscheiben mit unterschiedlichen Winkeln ausrichten.

Einzelne Displays können auch nur bei Bedarf oder auf Aufruf für den Fahrer sichtbar werden, wenn gemäß einer anderen Ausgestaltung der Erfindung einzelne Displays von den übrigen Displays unabhängig leuchtend oder beleuchtbar ausgebildet sind.

Besonders platzsparend baut die Anzeigeeinheit, wenn unabhängig voneinander leuchtende oder beleuchtbare Displays fluchtend hintereinander angeordnet sind. Eine solche Anordnung ist für Displays sinnvoll, bei denen davon ausgegangen werden kann, daß normalerweise nicht zwei gleichzeitig aktiviert sind, beispielsweise Displays für Störmeldungen.

Die Anzeigeeinheit kann auch bei sehr vielen Displays kompakt ausgebildet sein, wenn zusätzlich zu den den Lichtumlenkscheiben zugeordneten Displays an der der Betrachtungsseite gegenüberliegenden Rückseite des Gehäuses zumindest ein weiteres Display angeordnet ist.

Auch das entfernteste Display erscheint dem Betrachter ausreichend hell, wenn die von der Betrachtungsseite am weitesten entfernte Lichtumlenkscheibe als lichtundurchlässiger Spiegel ausgebildet ist. Durch einen solchen Spiegel sind die Reflexionsverluste besonders gering.

Besonders flexibel ist die erfindungsgemäße Anzeigeinheit, wenn ein Display die Bildfläche eines Computers ist.

Unterschiedliche Farbeffekte der Anzeigen kann man dadurch erreichen, daß zumindest eine Lichtumlenkscheibe eine Färbung aufweist.

Die Erfindung läßt zahlreiche Ausführungsformen zu. Zur weiteren Verdeutlichung ihres Grundprinzips ist eine davon stark schematisch in der Zeichnung dargestellt und wird nachfolgend beschrieben. In ihr zeigen die
- Fig. 1: eine Vorderansicht der erfindungsgemäßen Anzeigeeinheit,
- Fig. 2: einen Längsschnitt durch die Anzeigeeinheit,
- Fig. 3: eine perspektivische, durchsichtig dargestellte Ansicht der Anzeigeeinheit.

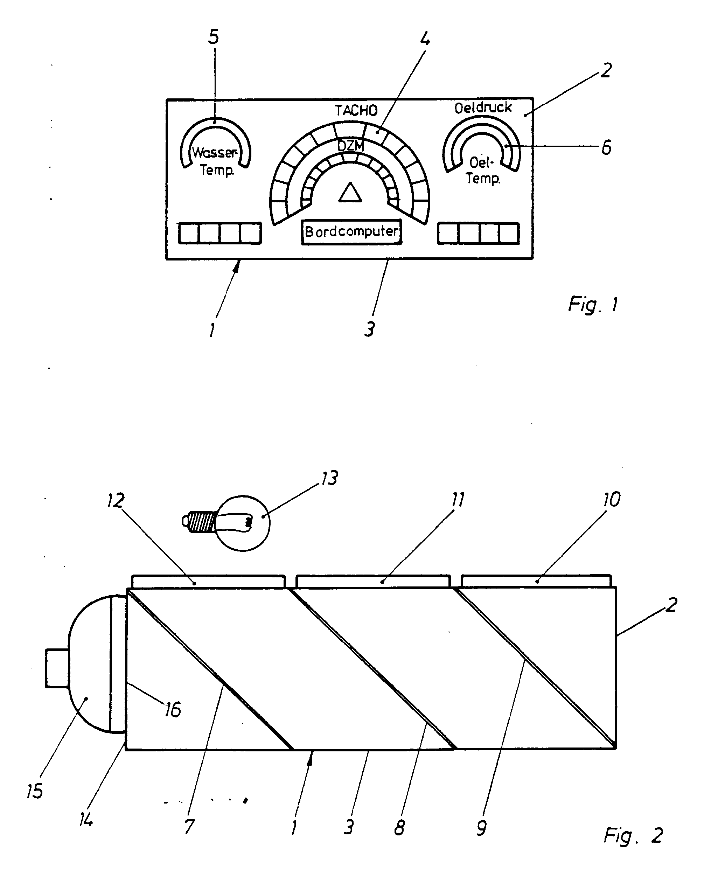

Die Figur 1 zeigt von einer Anzeigeeinheit 1 eine Betrachtungsseite 2. Von dieser Betrachtungsseite 2 her kann der Betrachter in ein ansonsten lichtundurchlässiges, innenseitig dunkel ausgebildetes Gehäuse 3 der Anzeigeeinheit 1 schauen und nahe im Vordergrund beispielsweise eine Tachometerskala 4, etwas weiter im Hintergrund beispielsweise eine Wassertemperaturskala 5 und noch weiter im Hintergrund beispielsweise eine Öltemperaturskala 6 erkennen.

In der Schnittdarstellung gemäß Figur 2 befindet sich die Betrachtungsseite 2 an der rechten Seite des Gehäuses 3. Zu erkennen ist, daß im Gehäuse 3 insgesamt drei dünnwandige Lichtumlenkscheiben 7, 8, 9 in einem Winkel von 45 Grad angeordnet sind. Auf der Oberseite des Gehäuses 3 sind hintereinander drei Displays 10, 11, 12 derart vorgesehen, daß sie durch die Lichtumlenkung der Lichtumlenkscheiben 7, 8, 9 von der Betrachtungsseite 2 her zu sehen sind. Das vorderste Display 10 kann beispielsweise die Tachometerskala 4 aufweisen, so daß diese dem Betrachter im Vordergrund erscheint. Das Display 11 soll die Wassertemperaturskala 5 visualisieren, während das Display 12 die Öltemperaturskala 6 zeigen soll. Eine allen Displays 10, 11, 12 gemeinsame Beleuchtung 13 durchleuchtet die üblicherweise als Flüssigkristallzellen ausgebildeten Displays 10, 11, 12 und macht sie somit für den Betrachter sichtbar. Für die Erfindung ist es natürlich auch möglich, selbstleuchtende Displays oder Warnlampen zu benutzen.

Das Gehäuse 3 hat eine der Betrachtungsseite 2 gegenüberliegende Rückseite 14, an der ein Computer 15 angeordnet ist, dessen Bildfläche 16 einen Teil der Rückseite 14 bildet. Dadurch ist die Bildfläche 16 von der Betrachtungsseite 2 her zu sehen.

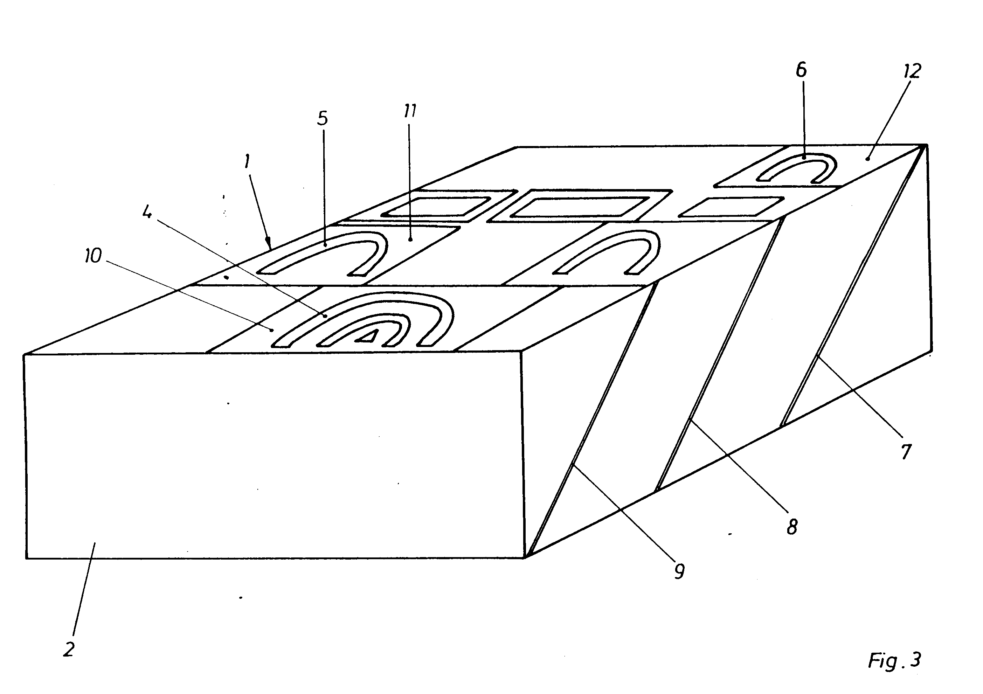

Die Figur 3 verdeutlicht die räumliche Wirkung der Anzeigen in der Anzeigeeinheit 1. Verdeutlicht wurde, wie das Bild des Displays 10 mit der Tachometerskala 4 von der Lichtumlenkscheibe 9 zur Betrachtungsseite 2 hin reflektiert wird. Zu sehen ist in Figur 3 desweiteren, daß das Display 11 mit der Wassertemperaturskala 5 seitlich zum Display 10 angeordnet ist, so daß sein von der Lichtumlenkscheibe 8 nach vorn reflektiertes Bild dem Betrachter weiter im Hintergund und seitlich zur Tachometerskala 4 erscheint. Das Display 12 mit der Öltemperaturskala 6 befindet sich nahe der Rückseite der Anzeigeeinheit 1. Seine Öltemperaturskala 6 wird von der Lichtumlenkscheibe 7 nach vorn zur Betrachtungsseite 2 reflektiert.

## Patentansprüche

1. Anzeigeeinheit mit mehreren voneinander unabhängigen Displays, beispielsweise eines Displays für die Geschwindigkeitsanzeige, eines Displays für die Wassertemperatur und eines Displays für die Füllstandsanzeige eines Kraftstofftankes, dadurch gekennzeichnet, daß in einem lichtundurchlässigen, innenseitig dunkel ausgebildeten Gehäuse (3) hintereinander zumindest zwei durchsichtige, dünnwandige Lichtumlenkscheiben (7, 8, 9) und die Displays (10, 11, 12) an zumindest einer Seitenwand des Gehäuses (3) vorgesehen sind und daß die Lichtumlenkscheiben (7, 8, 9) zur Reflexion des Bildes des jeweiligen Displays, (10, 11, 12) zu einer gemeinsamen Betrachtungsseite (2) des Gehäuses (3) ausgerichtet sind.

2. Anzeigeeinheit nach Anspruch 1, dadurch gekennzeichnet, daß die Lichtumlenkscheiben (7, 8, 9) von der Betrachtungsseite (2) aus gesehen im Gehäuse (3) hintereinander in einem Winkel von 45 Grad zum Betrachter und die Displays (10, 11, 12) entsprechend auf der Oberseite oder Unterseite des Gehäuses (3) oberhalb bzw. unterhalb der Lichtumlenkscheiben (7, 8, 9) angeordnet sind.

3. Anzeigeeinheit nach den Ansprüchen 1 oder 2, dadurch gekennzeichnet, daß das wichtigste Display (10) der der Betrachtungsseite (2) nächsten Lichtumlenkscheibe (9) zugeordnet ist und die übrigen Displays (11, 12) entsprechend ihrer Wichtigkeit den weiter rückwärts befindlichen Lichtumlenkscheiben (8, 7) zugeordnet sind.

4. Anzeigeeinheit nach zumindest einem der vorangehenden Ansprüche, dadurch gekennzeichnet, daß die einzelnen Displays (10, 11, 12) eine gemeinsame Beleuchtung (13) aufweisen.

5. Anzeigeeinheit nach zumindest einem der vorangehenden Ansprüche, dadurch gekennzeichnet, daß einzelne Displays (10, 11, 12) von den übrigen Displays (10, 11, 12) unabhängig leuchtend oder beleuchtbar ausgebildet sind.

6. Anzeigeeinheit nach Anspruch 5, dadurch gekennzeichnet, daß unbhängig voneinander leuchtende oder beleuchtbare Displays fluchtend hintereinander angeordnet sind.

7. Anzeigeeinheit nach zumindest einem der vorangehenden Ansprüche, dadurch gekennzeichnet, daß zusätzlich zu den den Lichtumlenkscheiben (7, 8, 9) zugeordneten Displays (12, 11, 10) an der der Betrachtungsseite (2) gegenüberliegenden Rückseite (14) des Gehäuses (3) zumindest ein weiteres Display angeordnet ist.

8. Anzeigeeinheit nach zumindest einem der vorangehenden Ansprüche, dadurch gekennzeichnet, daß die von der Betrachtungsseite (2) am weitesten entfernte Lichtumlenkscheibe als lichtundurchlässiger Spiegel ausgebildet ist.

9. Anzeigeeinheit nach zumindest einem der vorangehenden Ansprüche, dadurch gekennzeichnet, daß ein Display die Bildfläche (16) eines Computers (15) ist.

10. Anzeigeeinheit nach zumindest einem der vorangehenden Ansprüche, dadurch gekennzeichnet, daß zumindest eine Lichtumlenkscheibe (7, 8, 9) eine Färbung aufweist.

## Claims

1. An indicator unit with a plurality of mutually independent displays, for example a display for the speedometer, a display for the water temperature and a display for the fuel level indicator of a fuel tank, characterised in that at least two transparent, thin-walled light-deflecting plates (7, 8, 9) are provided one behind another in a housing (3) which is impervious to light and is constructed so that it is dark inside and the displays (10, 11, 12) are provided on at least one sidewall of the housing (3), and that the light-deflecting plates (7, 8, 9) are aligned so as to reflect the image of each display (10, 11, 12) towards a common viewing side (2) of the housing (3).

2. An indicator unit according to claim 1, characterised in that the light-deflecting plates (7, 8, 9) are arranged in the housing (3) one behind another at an angle of 45 degrees to the observer as seen from the viewing side (2), and the displays (10, 11, 12) are correspondingly arranged on the upper face or lower face of the housing (3) above or below the light-deflecting plates (7, 8, 9).

3. An indicator unit according to claim 1 or 2, characterised in that the most important display (10) is associated with the light-deflecting plate (9) which is nearest to the viewing side (2) and the remaining displays (11, 12) are associated with the light-deflecting plates (8, 7) situated further towards the back according to their importance.

4. An indicator unit according to any one of the preceding claims, characterised in that the individual displays (10, 11, 12) have a common source of illumination (13).

5. An indicator unit according to at least one of the preceding claims, characterised in that individual displays (10, 11, 12) are constructed so that they light up or can be illuminated independently of the remaining displays (10, 11, 12).

6. An indicator unit according to claim 5, characterised in that displays which light up or which can be illuminated independently of each other are disposed in alignment one behind another.

7. An indicator unit according to at least one of the preceding claims, characterised in that at least one further display is disposed on the rear side (14) of the housing (3) which is opposite to the viewing side (2), in addition to the displays (12, 11, 10) associated with the light-deflecting plates (7, 8, 9).

8. An indicator unit according to at least one of the preceding claims, characterised in that the light-deflecting plate which is furthest from the viewing side (2) is constructed as an opaque mirror.

9. An indicator unit according to at least one of the preceding claims, characterised in that one display is the display area (16) of a computer (15).

10. An indicator unit according to at least one of the preceding claims, characterised in that at least one light-deflecting plate (7, 8, 9) is tinted.

## Revendications

1. Unité d'affichage comportant plusieurs indicateurs ou afficheurs indépendants les uns des autres, par exemple un afficheur pour l'indication de la vitesse, un afficheur pour la température de l'eau et un afficheur pour l'indication du niveau de remplissage d'un réservoir de carburant, caractérisée en ce que, dans un boîtier (3) opaque, réalisé pour être sombre à l'intérieur, sont disposées l'une derrière l'autre au moins deux plaques (7, 8, 9) de déviation de lumière transparentes et de faible épaisseur, et les afficheurs (10, 11, 12) sont prévus sur au moins une paroi latérale du boîtier (3), et que les plaques (7, 8, 9) de déviation de lumière sont orientées en vue de la réflexion de l'image de l'afficheur (10, 11, 12) correspondant vers un côté d'observation (2) commun du boîtier (3).

2. Unité d'affichage selon la revendication 1, caractérisée en ce que les plaques (7, 8, 9) de déviation de lumière sont disposées l'une derrière l'autre dans le boîtier (3), vues à partir du côté d'observation (2), sous un angle de 45° par rapport à l'observateur, et les afficheurs (10, 11, 12) sont disposés de façon correspondante sur le côté supérieur ou le côté inférieur du boîtier (3), au-dessus ou au-dessous des plaques (7, 8, 9) de déviation de lumière.

3. Unité d'affichage selon la revendication 1 ou 2, caractérisée en ce que l'afficheur (10) le plus important est coordonné à la plaque (9 ) de déviation de lumière située le plus près du côté d'observation et les autres afficheurs (11, 12) sont coordonnés, en fonction de leur importance, aux plaques (87) de déviation de lumière situées plus vers l'arrière.

4. Unité d'affichage selon au moins une des revendications précédentes, caractérisée en ce que les différents afficheurs (10, 11, 12) présentent un éclairage (13) commun.

5. Unité d'affichage selon au moins une des revendications précédentes, caractérisée en ce que certains afficheurs (10, 11, 12) sont réalisés pour être lumineux indépendamment ou pour pouvoir être éclairés indépendamment des autres afficheurs (10, 11, 12).

6. Unité d'affichage selon la revendication 5, caractérisée en ce que des afficheurs lumineux indépendamment, ou pouvant être éclairés indépendamment les uns des autres, sont disposés en alignement l'un derrière l'autre.

7. Unité d'affichage selon au moins une des revendications précédentes, caractérisée en ce que, en plus des afficheurs (12, 11, 10) coordonnés aux plaques (7, 8, 9) de déviation de lumière, au moins un afficheur supplémentaire est disposé sur le côté arrière (14) du boîtier (3), situé à l'opposé du côté d'observation (2).

8. Unité d'affichage selon au moins une des revendications précédentes, caractérisée en ce que la plaque de déviation de lumière la plus éloignée du côté d'observation (2) est réalisée comme miroir opaque.

9. Unité d'affichage selon au moins une des revendications précédentes, caractérisée en ce qu'un afficheur est l'écran (16) d'un ordinateur (15).

10. Unité d'affichage selon au moins une des revendications précédentes, caractérisée en ce qu'au moins une plaque (7, 8, 9) de déviation de lumière présente une coloration.
